# EUROPEAN PATENT SPECIFICATION

(11) **EP 2 719 279 B1**
(45) Date of publication and mention of the grant of the patent: **12.12.2018**
(21) Application number: 12007077.6
(22) Date of filing: 12.10.2012
(51) Int. Cl.: A01M 25/00, A01M 1/10, A01M 1/20

(54) **Trap housing**
Fallengehäuse
Boîtier pour un piège

(43) Date of publication of application: 16.04.2014
(73) Proprietor: Plastdiversity, Lda, 3091-902 Marinha das Ondas (PT)
(72) Inventor: Moisés, Francisco, 3090-485 Marinha Das Ondas (PT)
(74) Representative: Ostertag & Partner Patentanwälte mbB

(56) References cited:
- WO-A1-2011/142739
- WO-A1-2011/142740
- US-B1- 6 182 482

## Description

The invention relates to a trap housing in accordance with the preamble of claim 1, see e.g. WO 2011/142739 A1. Vermin traps are used to catch insects and other harmful animals living in a house, a barn or elsewhere. The animals caught in the trap are used to recognize their species and to allow based on the species found effective fighting of the animals. If only a small number of animals is present, the traps may also serve as a valuable instrument for removing the animals.

There are two commonly used types of traps, traps including a one-way door arrangement allowing entering and impeding exiting of the trap on one hand and traps including a glued substrate whereon the animals are fixed by adhering thereto.

In either type of trap it is necessary to open the trap in view of inspecting or removing the animals caught and in view of preparing the trap for further use. In view of avoiding that the animals free themselves and of avoiding unauthorized persons to open the trap it is desirable, that the trap normally is permanently closed and can be opened by authorized people, only.

The present invention is concerned with providing a trap housing that cannot be easily opened neither by animals caught nor by unauthorized persons.

To this end the invention provides a trap housing according to the features of claim 1.

In the trap housing in accordance of the present invention the base member and the cover member of the housing are firmly connected by cooperating locking means. These locking means can be disengaged only by a person knowing that the base member and the cover member can be separated by applying a major force thereon or by using an instrument.

By having the key means adapted to elastically deform at least one of the locking means such that they become disengaged, it is advantageous in view of ease of opening the locking system.

By having the first and second locking means arranged in the vicinity of one of a plurality of sidewalls and end walls cooperating with a bottom wall to define a trough shaped base member, it is advantageous in view of ease of operation of the locking system and of retaining a maximum internal space of the trap housing.

Advantageous further developments of the invention are the subject matter of sub-claims.

The further development of claim 2 is advantageous in view of particularly reliable interengagement of the locking means carried by the base member and the cover member, respectively.

The embodiment in accordance with claim 3 is also advantageous in view of a strong locking force.

In a trap housing in accordance with claim 4 the cover member and the base member can be interconnected by simply exerting an appropriate force onto the cover member. The second locking means will then move over the protruding part of the first locking means under elastic deformation.

The embodiment of claim 5 will result in an increased locking force, since the cooperating surfaces of the first and second locking means will avoid a deformation in an opening sense of the locking system.

The further development of claim 6 is advantageous in view of a long life of the second locking means, since the locking forces are distributed on two locking elements.

In accordance with claim 7 this distribution of the locking force is symmetric.

In accordance with claim 8 the disengagement of the two locking means can be achieved by a simple rotational movement provided by a person attending to the trap housing.

The further development of claim 9 is again advantageous in view of having symmetric loads onto the two locking elements.

The invention will now be described in more detail referring to the drawings. Therein
- Figure 1:: shows a perspective view of the housing of a rat or mouse trap seen from a front thereof;
- Figure 2:: is a similar view of the mouse trap of figure 1 but seen from the rear side thereof;
- Figure 3:: is a plan view of the trap shown in figures 1 and 2, a key used for opening the trap being additionally shown;
- Figure 4:: is a side view of the trap of figures 1 to 3;
- Figure 5:: is a plan view of the rear side of the trap of figures 1 to 4;
- Figure 6:: is a plan view of the front side of the trap of figures 1 to 5;
- Figure 7:: is a second side view of the trap in accordance with figures 1 to 6;
- Figure 8:: is an enlarged perspective view of a locking system of a trap in accordance with figures 1 to 7, part of a top wall of a cover member having been broken away;
- Figure 9:: is an enlarged vertical perspective section through the trap along line IX-IX of figure 3;
- Figure 10:: is an enlarged perspective cross-section of the locking system of figure 9 taken along line X-X of figure 3 and figure 9;
- Figure 11:: is a vertical axial section through the locking system along line XI-XI of figure 3;

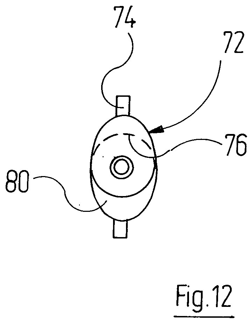

- Figure 12:: is an axial view of a key used with the trap housing vertical axial section through a modified locking system.

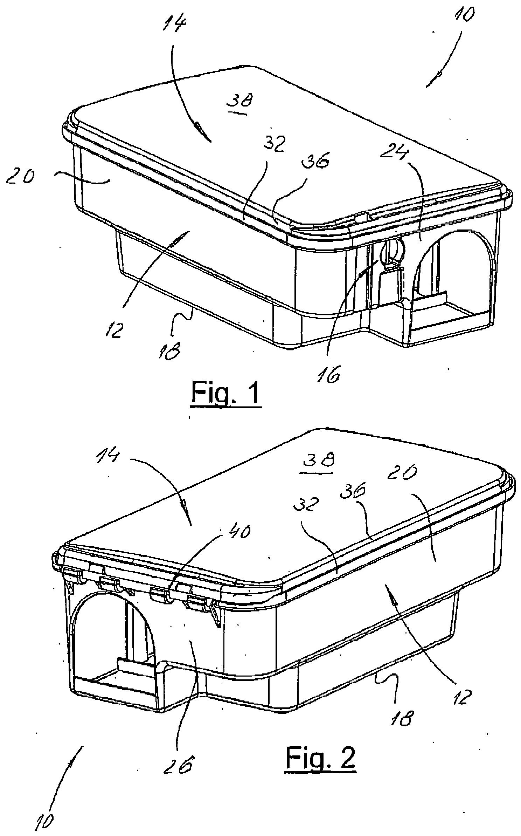

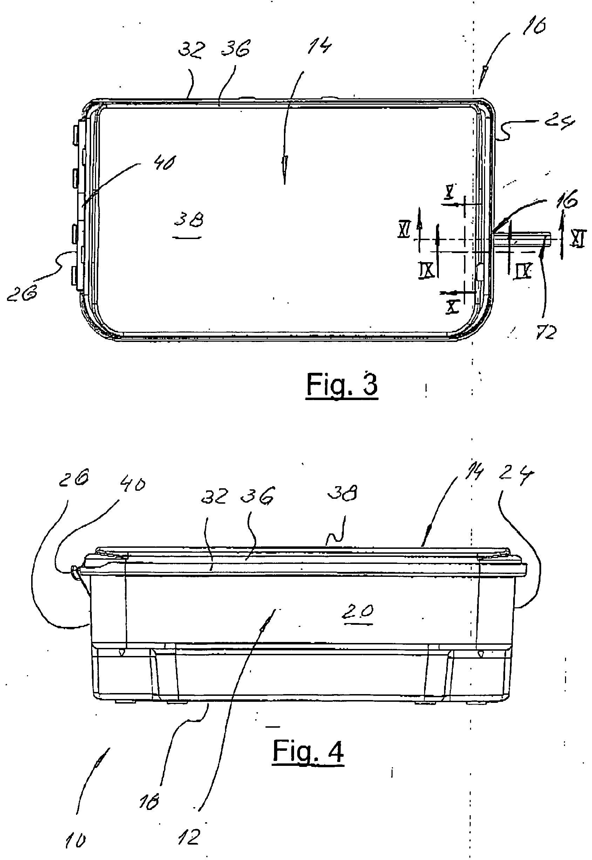

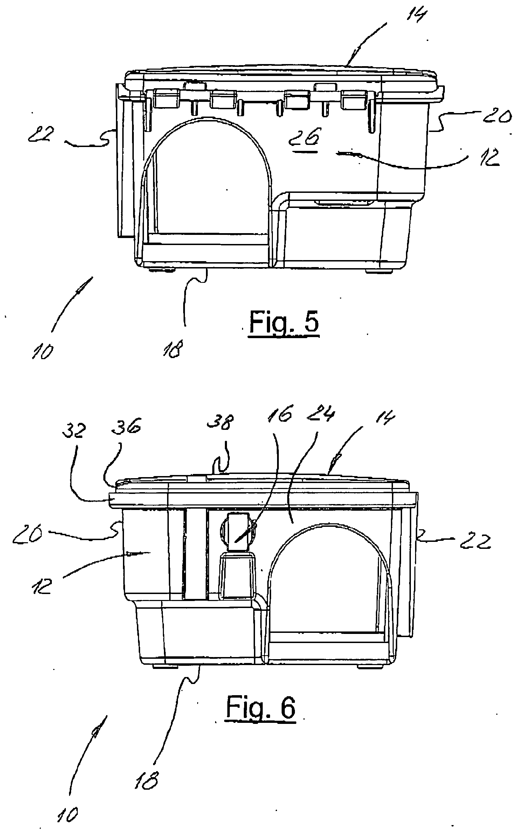

The figures 1 to 11 show a housing 10 of a trap that can be used for catching insects or small animals like mice or rats. Of course the dimensions of the housing are chosen in accordance with the kind of animals to be caught.

The housing 10 has a base member 12 and a cover member 14 that are releasably interconnected by means of a locking system generally shown at 16.

The base member 12 has a bottom wall 18, side walls 20, 22 and end walls 24, 26, the lower edges of which are formed integral with the bottom wall 18.

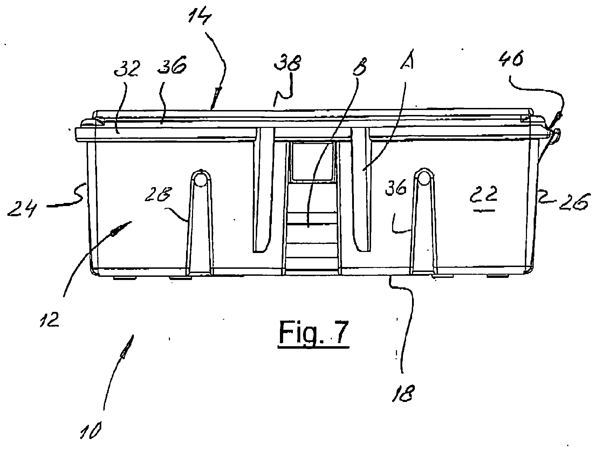

Within the base member 12 various baffle walls 28, 30 are provided as may be seen from figure 7. The baffle walls 28, 30 are arranged symmetric with respect to a transverse symmetry plane of the base member 12.

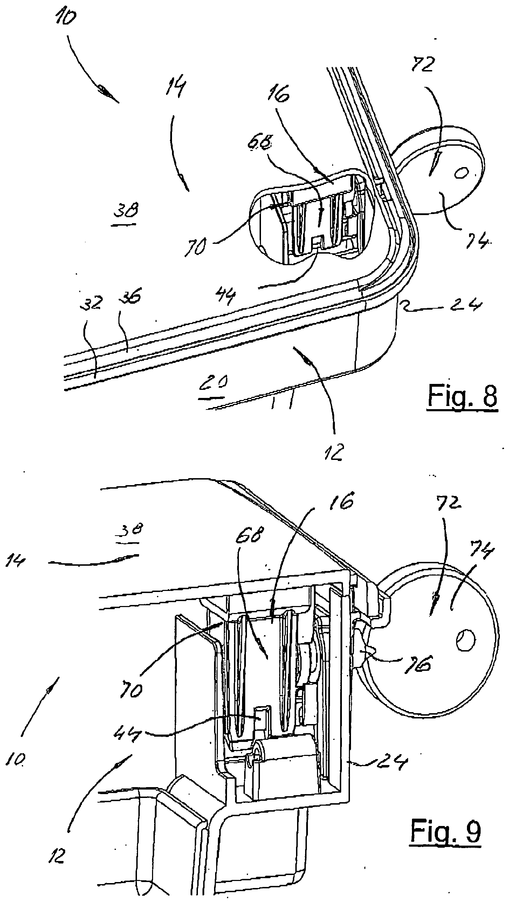

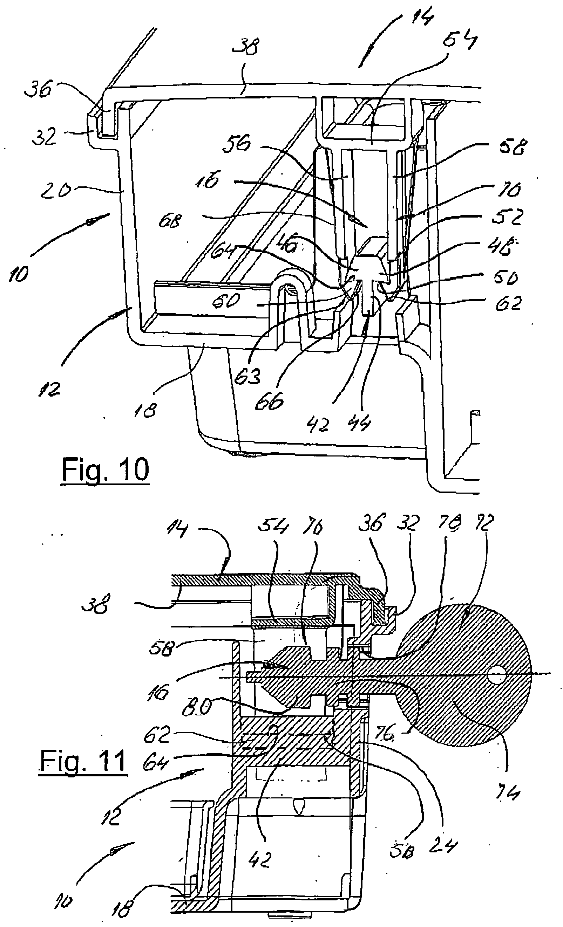

As may be seen from figures 9 and 10, a profiled flange portion 32 is formed integral with the upper edges of the side walls 20, 22 and the end walls 24, 26. Flange portion 32 defines a circumferential groove 34 receiving a complementarily shaped rim portion 36 of the cover member 40 formed integral with the rims of a main wall 38 of the cover member 14m which may be slightly convex.

The cover member 14 being applied to the base member 12 the main wall 38 of the cover member 14 extends parallel to the bottom wall 18 of the base member 12.

As may be seen from figure 2, the cover member 14 and the base member 12 have cooperating hinge portions defining a transverse hinge 40 between the base member 12 and the cover member 14 as may be seen from figure 2.

The locking system 16 will now be described in more detail with particular reference to figures 8 through 11.

A locking bar 42 is formed integral with a stepped portion of the bottom wall 18 and with an adjacent portion of the end wall 24 as may be best seen from figure 11.

The locking bar 42 has an essentially T-shaped cross profile, as may be seen from figure 10. It comprises a lower bar portion 44 of rectangular cross section and two upper bar portions 46, 48 each of essentially triangular shape. Each of the bar portions 46, 48 has a lower locking surface 50 slightly sloping in transverse inward and upward direction with respect to a horizontal plane. Each of the upper bar portion 46, 48 further has a ramp surface 52 being inclined with respect to a horizontal plane by about 60° as may be seen from figure 10.

The locking bar 42 forms a first locking means of the lock releasably interconnecting the base member 12 and the cover member 14.

Depending from the main wall 38 is a rectangular frame portion 54 formed integral therewith. The lower wall of the frame portion 54 carries two locking arms 56, 58 of rectangular cross section. The lower ends of the locking arms 56, 58 carry locking hooks 60, 62. The locking hooks have an upper locking surface 64 of the essentially same inclination as the locking surfaces 50 of the locking bar 42. A lower inward ramp surface of the locking hooks 60, 62 has an inclination essentially corresponding to the inclination of the ramp surfaces 52, respectively.

The locking arms 56, 58 are made from the same material as the cover member 14. Their geometry is chosen such that the locking arms 56, 58 can be moved in a direction being transverse to their longitudinal direction.

The same arrangement shown in figure 10 is to be thought above the drawing plane of figure 10. Thus there are two pairs of locking elements 68, 70 arranged under opposite transverse distance from the locking bar 42 as may be seen from figures 8 and 9. Each of the locking elements 68, 70 comprises components 56 to 66 as described above.

A key 72 used for disengaging the locking arm 56, 58 from the locking bar 42 has an actuating portion 74 formed as a circular disc. The actuating portion 74 is connected with a shaft portion 76 fitting into a key hole 78 formed in the end wall 24 so as to provide a rotational bearing for the key 72 on the housing 10.

The shaft portion 76 comprises a cam portion 80 having an essentially elliptic cross section. The small axis of the cam portion 80 is somewhat smaller than the distance between the two inward surfaces of the locking arms 56, 58 of the locking elements 68, 70. The main axis of the cam portion is somewhat larger than the desired distance between the locking arms 56, 58 being sufficient to move the edges of the locking hooks 60, 62 beyond the edges of the locking bar 44 in transverse outward direction so that the locking arms 56, 58 and thus the entire cover member 14 can be moved in upward vertical direction and the cover member 14 becomes free from the base member 12.

A further embodiment not shown in the drawings generally corresponds to the embodiment of figures 1 to 11 just described.

The only difference is that the key 72 is inserted into a key hole 76 of the cover member 16 and the axis of rotation of the key 72 is oriented in vertical direction. Thus it is not necessary to again completely describe the details of this locking system.

## Claims

1. Trap housing (10) comprising a base member (12) and a cover member (14) adapted to be releasably connected to the base member (12) by cooperating first (46, 48) and second (60, 62) locking means provided on the base member (12) and the cover member (14), respectively, the first locking means (46, 48) being formed with a first positive locking surface region (50) and the second locking means (60, 62) being formed with a second positive locking surface region (64) positively cooperating with the first positive locking means surface region (50) such that the two positive locking means can be engaged and disengaged by elastic deformation of at least one of the locking means, the second locking means (60, 62) comprises two resilient arms (56, 58) each carrying a hook portion (60, 62), the first and the second locking means being arranged in the vicinity of one of a plurality of sidewalls (20, 22) and end walls (24, 26) cooperating with a bottom wall (18) to define a trough shaped base member (12), key means (72) being provided to elastically deform at least one of the first and second positive locking means such that they become disengaged,
**characterized in that**
the key means (72) has a shaft portion (76) fitting into a key hole (78) of an end wall (24) of the trough so as to provide a rotational bearing for the key means (72) on the housing, the resilient arms of the second locking means of rectangular cross section being carried by a lower wall of a rectangular frame portion (54) formed integral with a main wall (38) of the cover member (14).

2. The housing as in Claim 1, **characterized in that** the first locking means comprises an undercut locking bar (44).

3. The housing as in Claims 1 or 2, **characterized in that** the second locking means comprises at least one a hook portion carried by a resilient arm (56; 58).

4. The housing as in Claim 3, **characterized in that** the hook portion (60, 62) has an radially outward first ramp portion (63).

5. The housing as in Claim 3 or 4, **characterized in that** the hook portion (60, 62) carries an axially inward ramp portion (66).

6. The housing as in Claim 2 and one of Claims 3 to 5, **characterized in that** the second locking means comprises two locking elements (60, 62) arranged on either side of the locking bar (44).

7. The housing as in Claim 6, **characterized in that** the two second locking elements (60, 62) are symmetric with respect to a symmetry plane of the locking bar (44).

8. The housing as in one of Claims 1 to 7, **characterized in that** the key means (72) comprise an excentric key portion (80).

9. The housing as in Claim 8, **characterized in that** the key means (72) is arranged between the two second locking elements (60, 62).

## Patentansprüche

1. Fallengehäuse (10) mit einem Basiselement (12) und einem Abdeckelement (14), das dafür geeignet ist, mit dem Basiselement (12) durch zusammenwirkende erste (46, 48) und zweite (60, 62) Verriegelungsmittel, die an dem Basiselement (12) beziehungsweise dem Abdeckelement (14) bereitgestellt werden, lösbar verbunden zu werden, wobei das erste Verriegelungsmittel (46, 48) mit einem ersten positiven Verriegelungsflächenbereich (50) ausgebildet ist und das zweite Verriegelungsmittel (60, 62) mit einem zweiten positiven Verriegelungsflächenbereich (64) ausgebildet ist, der mit dem ersten positiven Verriegelungsflächenbereich (50) derart zusammenwirkt, dass die beiden positiven Verriegelungsmittel durch elastische Verformung mindestens eines der Verriegelungsmittel in Eingriff gebracht und gelöst werden können, wobei das zweite Verriegelungsmittel (60, 62) zwei Federarme (56, 58), die jeweils einen Hakenabschnitt (60, 62) tragen, aufweist, wobei das erste und das zweite Verriegelungsmittel in der Nähe einer der Vielzahl von Seitenwänden (20, 22) und Stirnwänden (24, 26), die mit einer Bodenwand (18) zusammenwirken, um ein trogförmiges Basiselement (12) festzulegen, angeordnet sind, wobei ein Schlüsselmittel (72) bereitgestellt wird, um zumindest das erste (46, 48) oder das zweite (60, 62) positive Verriegelungsmittel elastisch zu verformen, sodass sie voneinander gelöst werden,
**dadurch gekennzeichnet, dass**
das Schlüsselmittel (72) einen Schaftabschnitt (76), der in ein Schlüsselloch (78) einer Stirnwand (24) des Trogs passt, um ein Drehlager für das Schlüsselmittel (72) am Gehäuse zur Verfügung zu stellen, aufweist, wobei die Federarme des zweiten Verriegelungsmittels rechteckigen Querschnitts von einer unteren Wand eines rechteckigen Rahmenabschnitts (54) getragen werden, der mit einer Hauptwand (38) des Abdeckelements (14) einstückig ausgebildet ist.

2. Das Gehäuse nach Anspruch 1, **dadurch gekennzeichnet, dass** das erste Verriegelungsmittel einen Hinterschnittverriegelungsriegel (44) aufweist.

3. Das Gehäuse nach Anspruch 1 oder 2, **dadurch gekennzeichnet, dass** das zweite Verriegelungsmittel zumindest einen von einem Federarm (56; 58) getragenen Hakenabschnitt (60, 62) aufweist.

4. Das Gehäuse nach Anspruch 3, **dadurch gekennzeichnet, dass** der Hakenabschnitt (60, 62) einen radial nach außen gerichteten ersten Rampenabschnitt (63) aufweist.

5. Das Gehäuse nach Anspruch 3 oder 4, **dadurch gekennzeichnet, dass** der Hakenabschnitt (60, 62) einen axial einwärts gerichteten Rampenabschnitt (66) trägt.

6. Das Gehäuse nach Anspruch 2 und einer der Ansprüche 3 bis 5, **dadurch gekennzeichnet, dass** das zweite Verriegelungsmittel zwei Verriegelungselemente (60, 62) aufweist, die auf beiden Seiten des Verriegelungsriegels (44) angeordnet sind.

7. Das Gehäuse nach Anspruch 6, **dadurch gekennzeichnet, dass** die zwei zweiten Verriegelungselemente (69, 62) hinsichtlich einer Symmetrieebene des Verriegelungsriegels (44) symmetrisch sind.

8. Das Gehäuse nach einem der Ansprüche 1 bis 7, **dadurch gekennzeichnet, dass** das Schlüsselmittel (72) einen exzentrischen Schlüsselabschnitt (80) aufweist.

9. Das Gehäuse nach Anspruch 8, **dadurch gekennzeichnet, dass** das Schlüsselmittel (72) zwischen den zwei zweiten Verriegelungselementen (60, 62) angeordnet ist.

## Revendications

1. Boîtier de piège (10) comprenant un élément de base (12) et un élément de couvercle (14) adapté pour être fixé de manière amovible sur l'élément de base (12) via une coopération de premier (46, 48) et deuxième (60, 62) moyens de verrouillage prévus sur l'élément de base (12) et l'élément de couvercle (14), respectivement, le premier moyen de verrouillage (46, 48) étant formé avec une première région de surface de verrouillage par complémentarité de forme (50) et le deuxième moyen de verrouillage (60, 62) étant formé avec une deuxième région de surface de verrouillage par complémentarité de forme (64) coopérant par complémentarité de forme avec la première région de surface de verrouillage par complémentarité de forme (50) de telle sorte que les deux moyens de verrouillage par complémentarité de forme peuvent être engagés et désengagés par déformation élastique d'au moins l'un des moyens de verrouillage, le deuxième moyen de verrouillage (60, 62) comprend deux bras résilients (56, 58) chacun supportant une partie de crochet (60, 62), les premier et deuxième moyens de verrouillage étant agencés à proximité d'une paroi parmi une pluralité de parois latérales (20, 22) et de parois d'extrémité (24, 26) coopérant avec une paroi de fond (18) pour définir un élément de base en forme de cuve (12), un moyen de clé (72) étant fourni pour déformer de manière élastique au moins l'un des premier et deuxième moyens de verrouillage par complémentarité de forme de telle sorte qu'ils se désengagent, **caractérisé en ce que** le moyen de clé (72) présente une partie de tige (76) s'insérant dans un trou de serrure (78) d'une paroi d'extrémité (24) de la cuve de sorte à fournir un support rotatif au moyen de clé (72) sur le boîtier, les bras résilients du deuxième moyen de verrouillage de section transversale rectangulaire étant supportés par une paroi inférieure d'un partie d'ossature rectangulaire (54) formée en un seul tenant avec une paroi principale (38) de l'élément de couvercle (14).

2. Boîtier selon la revendication 1, **caractérisé en ce que** le premier moyen de verrouillage comprend une tige de verrouillage entaillée (44).

3. Boîtier selon les revendications 1 ou 2, **caractérisé en ce que** le deuxième moyen de verrouillage comprend au moins une partie de crochet (60, 62) supportée par un bras résilient (56 ; 58).

4. Boîtier selon la revendication 3, **caractérisé en ce que** la partie de crochet (60, 62) présente une première partie en pente inclinée radialement vers l'extérieur (63).

5. Boîtier selon les revendications 3 ou 4, **caractérisé en ce que** la partie de crochet (60, 62) présente une partie en pente inclinée axialement vers l'intérieur (66).

6. Boîtier selon la revendication 2 et l'une des revendications 3 à 5, **caractérisé en ce que** le deuxième moyen de verrouillage comprend deux éléments de verrouillage (60, 62) agencés de chaque côté de la tige de verrouillage (44).

7. Boîtier selon la revendication 6, **caractérisé en ce que** les deux deuxièmes éléments de verrouillage (60, 62) sont symétriques par rapport à un plan de symétrie de la tige de verrouillage (44).

8. Boîtier selon l'une des revendications 1 à 7, **caractérisé en ce que** le moyen de clé (72) comprend une partie de clé excentrique (80).

9. Boîtier selon la revendication 8, **caractérisé en ce que** le moyen de clé (72) est agencé entre les deux deuxièmes éléments de verrouillage (60, 62).
